# EUROPEAN PATENT APPLICATION

(11) **EP 4 589 530 A1**
(43) Date of publication of application: **23.07.2025**
(21) Application number: 23864752.3
(22) Date of filing: 14.09.2023
(51) Int. Cl.: G06T 7/55

(54) **BINOCULAR IMAGE GENERATION METHOD AND APPARATUS, ELECTRONIC DEVICE AND STORAGE MEDIUM**

(30) Priority: 14.09.2022 CN 202211115037
(71) Applicant: Beijing Zitiao Network Technology Co., Ltd., Beijing 100190 (CN)
(72) Inventor: WANG, Guangwei, Beijing 100028 (CN)
(74) Representative: Dentons UK and Middle East LLP
(86) International application number: PCT/CN2023/118765
(87) International publication number: WO 2024/056020

(57) **Abstract**

Disclosed in the embodiments of the present disclosure are a binocular image generation method and apparatus, an electronic device and a storage medium. The method comprises: acquiring an original image; according to the depth values of a plurality of pixels in a saliency region of the original image, determining a target depth value corresponding to a zero-parallax plane in a binocular image to be generated; and generating the binocular image according to the target depth value and the depth values of the plurality of pixels in the original image.

## Description

The present application claims priority to Chinese Patent Application No. 202211115037.X, filed with the China National Intellectual Property Administration on September 14, 2022, which is incorporated herein by reference in its entirety.

### TECHNICAL FIELD

Embodiments of the present disclosure relate to the field of computer technologies, and for example, to a binocular image generation method and apparatus, an electronic device, and a storage medium.

### BACKGROUND ART

In the field of virtual reality (VR) headsets, a binocular image (i.e., a left-eye image and a right-eye image) is displayed to allow a user to achieve the effect of viewing a stereoscopic image in the visual sense. In the related art, a binocular image can be generated from a monocular image by adjusting a depth of an object in the image. However, the viewing experience for the binocular image generated in the related art often fails to be guaranteed.

### SUMMARY OF THE INVENTION

The embodiments of the present disclosure provide a binocular image generation method and apparatus, an electronic device, and a storage medium, which can improve the viewing experience of a user.

According to a first aspect, an embodiment of the present disclosure provides a binocular image generation method. The method includes:
obtaining an original image;
determining, based on depth values of a plurality of pixels in a salient region of the original image, a target depth value corresponding to a zero-disparity plane in a binocular image to be generated; and
generating the binocular image based on the target depth value and depth values of a plurality of pixels in the original image.

According to a second aspect, an embodiment of the present disclosure further provides a binocular image generation apparatus. The apparatus includes:
an image obtaining module configured to obtain an original image;
a zero-disparity depth value determination module configured to determine, based on depth values of a plurality of pixels in a salient region of the original image, a target depth value corresponding to a zero-disparity plane in a binocular image to be generated; and
an image generation module configured to generate the binocular image based on the target depth value and depth values of a plurality of pixels in the original image.

According to a third aspect, an embodiment of the present disclosure further provides an electronic device, including:
at least one processor; and
a storage apparatus configured to store at least one program, where
the at least one program, when executed by the at least one processor, causes the at least one processor to implement the binocular image generation method described in any one of the embodiments of the present disclosure.

According to a fourth aspect, an embodiment of the present disclosure further provides a storage medium including computer-executable instructions that, when executed by a computer processor, cause the binocular image generation method described in any one of the embodiments of the present disclosure to be performed.

### BRIEF DESCRIPTION OF DRAWINGS

FIG. 1 is a schematic flowchart of a binocular image generation method according to an embodiment of the present disclosure;
FIG. 2 is a schematic diagram of a disparity in a binocular image in a binocular image generation method according to an embodiment of the present disclosure;
FIG. 3 is a schematic flowchart of a binocular image generation method according to an embodiment of the present disclosure;
FIG. 4 is a schematic diagram of filling a void in a binocular image generation method according to an embodiment of the present disclosure;
FIG. 5 is a schematic flowchart of a binocular image generation method according to an embodiment of the present disclosure;
FIG. 6 is a schematic diagram of a structure of a binocular image generation apparatus according to an embodiment of the present disclosure; and
FIG. 7 is a schematic diagram of a structure of an electronic device according to an embodiment of the present disclosure.

### DETAILED DESCRIPTION OF THE INVENTION

The term "include/comprise" used herein and the variations thereof are an openended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "at least one".

The names of messages or information exchanged between a plurality of apparatuses in the implementations of the present disclosure are used for illustration only, and are not used to limit the scope of these messages or information.

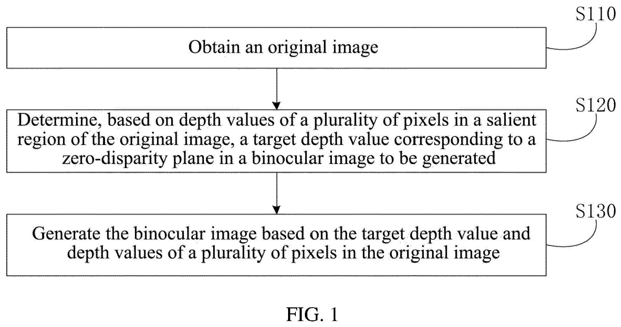

FIG. 1 is a schematic flowchart of a binocular image generation method according to an embodiment of the present disclosure. This embodiment of the present disclosure is applicable to the generation of a binocular image from a monocular image, for example, to the generation of a video frame of a binocular video from a video frame of a monocular video. The method may be performed by a binocular image generation apparatus. The apparatus may be implemented in the form of at least one of software and hardware, and may be configured in an electronic device, for example, in a computer.

As shown in FIG. 1, the binocular image generation method provided in this embodiment may include the following steps.

S110: Obtain an original image.

The original image may be considered as a monocular image.

S120: Determine, based on depth values of a plurality of pixels in a salient region of the original image, a target depth value corresponding to a zero-disparity plane in a binocular image to be generated.

In this embodiment of the present disclosure, depth values of a plurality of pixels in the original image may be estimated using an existing monocular image depth estimation method, such as a conventional cue-based method, a conventional machine learning-based method, and a supervised or unsupervised depth learning-based method.

The salient region may be understood as a region corresponding to an object of interest to a user, a region in the image that includes main information, etc. The object of interest may be obtained based on priori information, or may be obtained in real time based on an existing detection method for a salient region in an image. For example, the salient region in the original image is detected based on a histogram-based contrast (HC) algorithm, a context-aware (CA) algorithm, a graph-regularized (GR) algorithm, etc. Then, the depth values of the plurality of pixels in the salient region of the original image can be determined.

The binocular image may include a left-eye image and a right-eye image. A disparity in the binocular image may include at least one of the following: a shift position of a pixel in the left-eye image relative to a corresponding pixel in the right-eye image; and a shift position of a pixel in the right-eye image relative to a corresponding pixel in the left-eye image. The zero-disparity plane in the binocular image may be considered as a plane in which there is no shift between pixels in the left-eye image and the right-eye image or a shift is so small that it is visually imperceptible. The plane is generally a plane providing the best viewing experience.

Determining, based on the depth values of the plurality of pixels in the salient region, the target depth value corresponding to the zero-disparity plane in the binocular image to be generated may include: compiling statistics on the depth values of the plurality of pixels in the salient region, and using a mean, a median, a most frequent depth value, etc. of the plurality of depth values as the target depth value corresponding to the zero-disparity plane in the binocular image to be generated.

In some optional implementations, determining, based on the depth values of the plurality of pixels in the salient region of the original image, the target depth value corresponding to the zero-disparity plane in the binocular image to be generated may include: generating a first histogram based on the depth values of the plurality of pixels in the salient region of the original image; and determining, based on a distribution of the depth values in the first histogram, the target depth value corresponding to the zero-disparity plane in the binocular image to be generated.

The first histogram may be formed by a series of vertical rectangular bars of varying heights, where a horizontal axis of the rectangular bar may represent a depth value range, and a vertical axis thereof may represent a number of pixels that fall into a corresponding depth value range. The first histogram may be generated by counting the number of pixels that fall into each depth value range for the depth values of the plurality of pixels in the salient region.

Determining, based on the distribution of the depth values in the first histogram, the target depth value corresponding to the zero-disparity plane in the binocular image to be generated may include: determining the target depth value corresponding to the zero-disparity plane in the binocular image to be generated, based on a depth value range in the first histogram within which a largest number of pixels are distributed. For example, a median of the depth value range within which a largest number of pixels are distributed may be used as the target depth value, or any one of the depth values within the depth value range within which a largest number of pixels are distributed may be used as the target depth value, which is not exhausted herein. Moreover, the target depth value corresponding to the zero-disparity plane in the binocular image to be generated may alternatively be determined based on top N depth value ranges in the first histogram within which a largest number of pixels are distributed, where N is a positive integer greater than or equal to 1. For example, statistics on depth values of a plurality of pixels in top three depth value ranges within which a largest number of pixels are distributed may be compiled, and the target depth value is determined based on a mean, a median, etc. of these depth values.

In these optional implementations, a best viewing position, that is, the target depth value corresponding to the zero-disparity plane, can be determined by performing histogram analysis on the depth values of the plurality of pixels in the salient region of the original image.

S130: Generate the binocular image based on the target depth value and the depth values of the plurality of pixels in the original image.

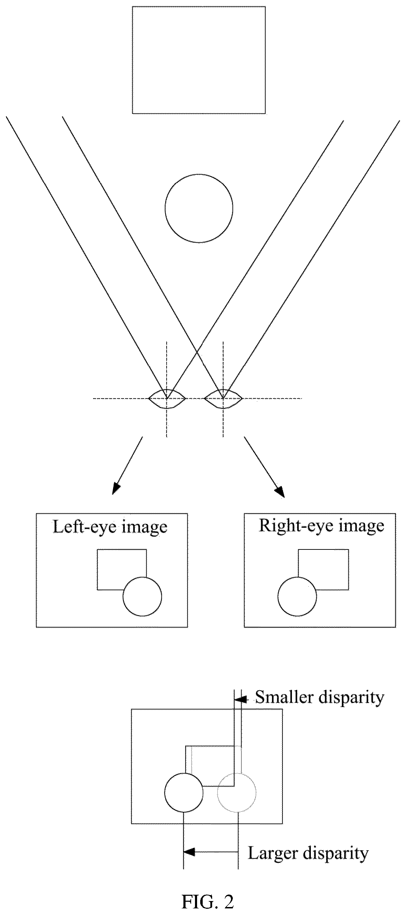

In this embodiment of the present disclosure, an important step for generating the binocular image from the monocular image is creating a disparity. According to the principle of three-dimensional imaging, there may be a relationship between a disparity d and a scene depth value Z as follows: d = ft/Z, where t may represent an interpupillary distance, and f may represent a focal length of two eyes. Due to a small interpupillary distance of human eyes (around 60 mm for an adult), the disparity is usually a horizontal disparity. In addition, the disparity is larger for an object nearer to a user and smaller for an object farther away from the user. For example, FIG. 2 is a schematic diagram of a disparity in a binocular image in a binocular image generation method according to an embodiment of the present disclosure. With reference to FIG. 2, the disparity may be a disparity from the left-eye image to the right-eye image. The disparity is larger for a circular object nearer to the user and smaller for a square object farther away from the user.

In addition, if a plane corresponding to the target depth value is used as the zero-disparity plane, a region in front of the zero-disparity plane and nearer to the user is used as a negative disparity region, and a region behind the zero-disparity plane and farther away from the user is used as a positive disparity region. An object in the zero-disparity plane may have no shift in the left-eye image and in the right-eye image; an object in the negative disparity region may have a shift to the left in the left-eye image and to the right in the right-eye image; and an object in the positive disparity region may have a shift to the right in the left-eye image and to the left in the right-eye image.

The depth values of the plurality of pixels in the original image that are estimated using the existing monocular image depth estimation method are scaleless depth values, which may represent a relative distance between an object corresponding to the pixels and an image acquisition device, but does not include scale information. In other words, the depth values of the pixels that are estimated using the monocular image depth estimation method are not the scene depth value Z of the object corresponding to the pixels. However, there is a positive correlation mapping relationship between a scaleless depth value and an absolute depth value. The scene depth value including scale information and corresponding to the target depth value and the depth values of the plurality of pixels in the original image may be obtained by presetting the mapping relationship and substituting the target depth value and the depth values of the pixels in the original image into the mapping relationship. For example, a scale coefficient may be preset and multiplied by the target depth value and the depth values of the plurality of pixels in the original image, to obtain the scene depth value corresponding to the target depth value and the depth values of the plurality of pixels in the original image.

The depth value of each pixel in the original image may be compared with the target depth value to determine a shift direction of the pixel, and a disparity (i.e., a shift magnitude) may be determined based on the scene depth value corresponding to the depth value of each pixel, such that the left-eye image and the right-eye image that have the disparity are created.

In some optional implementations, generating the binocular image corresponding to the original image based on the target depth value and the depth values of the plurality of pixels in the original image may include: determining, based on the target depth value and the depth values of the plurality of pixels in the original image, displacement vectors of the plurality of pixels in the original image in each of a left-eye image and a right-eye image that are to be generated; and processing the plurality of pixels in the original image based on the plurality of displacement vectors, to generate the left-eye image and the right-eye image.

In these optional implementations, the displacement vectors may include the shift magnitudes and the shift directions of the pixels in the left-eye image and the right-eye image that are to be generated, and the displacement vectors are usually horizontal displacement vectors. For the left-eye image and the right-eye image that are to be generated, each pixel in the original image may be moved based on corresponding displacement vectors, to generate the left-eye image and the right-eye image that correspond to the original image.

In some optional implementations, before generating the binocular image based on the target depth value and the depth values of the plurality of pixels in the original image, the method may further include: filtering out a pixel whose depth value is less than a first threshold and a pixel whose depth value is greater than a second threshold from the original image, where the first threshold is less than the second threshold.

The first threshold and the second threshold may be preset based on empirical values or experimental values, or may be set based on a distribution of the depth values of the plurality of pixels in the original image. For example, histogram analysis may be performed on the depth values of the plurality of pixels in the original image, to obtain a second histogram. Aiming at retaining X% (X being, for example, 90, 95, or 98) of the pixels in the histogram, pixels whose depth values are at two ends of the second histogram may be filtered out, so that the first threshold and the second threshold may be determined.

In these optional implementations, filtering out pixels with an excessively large or small depth may allow pixels of abnormal depths to be filtered out, so that depth values of pixels in an image can be optimized, ensuring the continuity of the depth values of the plurality of the pixels in the image when the depth values are changing, thereby facilitating the generation of a binocular image with a better effect.

In some optional implementations, before generating the binocular image based on the target depth value and the depth values of the plurality of pixels in the original image, the method may further include: performing filtering on the depth values of the plurality of pixels in the original image. In these optional implementations, the filtering may be performed on the depth values of the plurality of pixels in the original image, so that the depth values of the plurality of pixels in the original image can be smoothened, which can improve the effect of generating the binocular image.

It can be understood that, before the binocular image is generated based on the target depth value and the depth values of the plurality of pixels in the original image, at least one of the following operations may be performed: filtering out a pixel whose depth value is less than the first threshold and a pixel whose depth value is greater than the second threshold from the original image; and performing filtering on the depth values of the plurality of pixels in the original image. If both of the above operations are performed, the pixel whose depth value is less than the first threshold and the pixel whose depth value is greater than the second threshold may be filtered out from the original image first, and the filtering may then be performed on a depth space formed by depth values of a plurality of pixels remaining after filtering. Then, the binocular image may be generated based on the filtered depth space and the target depth value. Since the depth values obtained through monocular image depth estimation are scaleless, the calibration of the depth values can be implemented through at least one of the above filtering-out and filtering.

In the technical solution of this embodiment of the present disclosure, the target depth value corresponding to the zero-disparity plane in the binocular image to be generated is determined based on the depth values of the plurality of pixels in the salient region of the original image; and the binocular image is generated based on the target depth value and the depth values of the plurality of pixels in the original image. During the process of generating the binocular image, the target depth value corresponding to the zero-disparity plane in the binocular image to be generated is determined based on the depth values of the pixels in the salient region of interest to the user, so that the zero-disparity plane can be at a location of interest to the user. Therefore, the viewing experience of the user can be improved.

This embodiment of the present disclosure may be combined with the plurality of optional solutions in the binocular image generation method provided in the above embodiment. In the binocular image generation method provided in this embodiment, the quality of generating the binocular image is optimized. A portion which is covered in the original image but needs to be displayed in the binocular image may be a void in the generated binocular image. The void may be filled with a background portion by performing image gradient diffusion from an edge with a large depth value to an edge with a small depth value, which achieves a better visual effect and optimizes the quality of generating the binocular image.

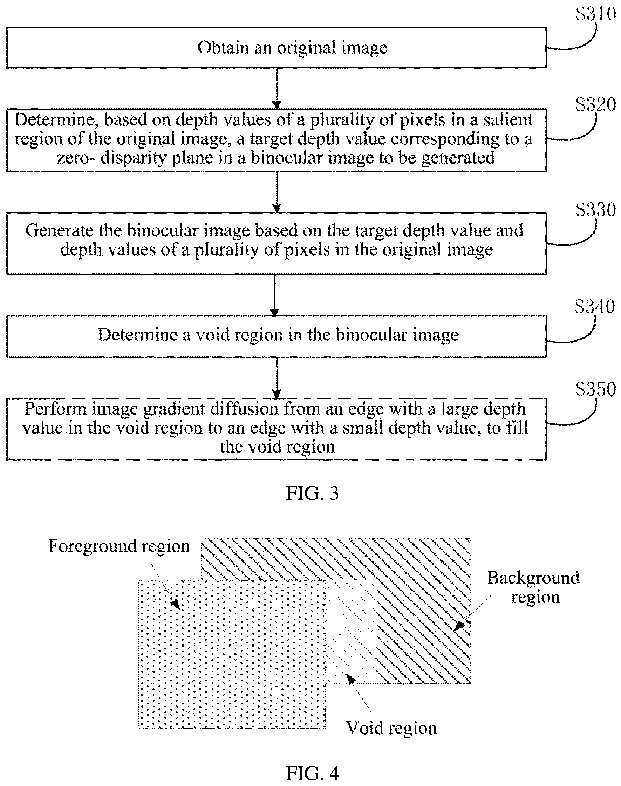

FIG. 3 is a schematic flowchart of a binocular image generation method according to an embodiment of the present disclosure. As shown in FIG. 3, the binocular image generation method provided in this embodiment may include the following steps.

S310: Obtain an original image.

S320: Determine, based on depth values of a plurality of pixels in a salient region of the original image, a target depth value corresponding to a zero-disparity plane in a binocular image to be generated.

S330: Generate the binocular image based on the target depth value and depth values of a plurality of pixels in the original image.

S340: Determine a void region in the binocular image.

In this embodiment, the void region refers to a blank unknown region without pixel information. The void region results from a hidden region covered in the original image being displayed in the binocular image. The void region in the binocular image may be detected using an existing image detection method, such as an edge detection method. Alternatively, the void region may be determined by comparing depth values at same pixel locations in the original image and the binocular image. For example, a region with a largest change in the depth values may be used as the void region. Moreover, other methods for determining the void region may also be applied here, which are not exhausted herein.

S350: Perform image gradient diffusion from an edge with a large depth value in the void region to an edge with a small depth value, to fill the void region.

For example, FIG. 4 is a schematic diagram of filling a void in a binocular image generation method according to an embodiment of the present disclosure. With reference to FIG. 4, the void region is a blank region. In the void region, the edge with a larger depth value may be referred to as an outer edge, and may be considered as an edge at which a background region meets the void region; and the edge with a smaller depth value may be referred to as an inner edge, and may be considered as an edge at which a foreground region meets the void region. Since pixel information of the covered region is most likely the same as pixel information of the background region, the void region may be filled with the pixel information of the background region.

In this embodiment, an image gradient of an edge portion of the background region may be calculated, followed by performing image gradient diffusion of a constant gradient direction in the void region. For the filling effect, reference may be made to FIG. 4, in which texture, etc. of the background region may be stretched into an edge portion of the foreground region to fill the void region.

In some optional implementations, after the void region is filled, the method may further include: performing filtering on the filled void region. In these optional implementations, a size of a filter kernel selected for the filtering may be related to a distance of a pixel to be subjected to the filtering from the edge of the void region. When the distance from the edge is shorter, the filter kernel may be larger, so that the edge portion is smoother, and the filled void is fused with an adjacent region more naturally. Performing the filtering on the filled void region makes it possible to generate a smoother and more natural binocular image, which can improve the visual viewing experience.

According to the technical solution of this embodiment of the present disclosure, the quality of generating the binocular image is optimized. A portion which is covered in the original image but needs to be displayed in the binocular image may be a void in the generated binocular image. The void may be filled with a background portion by performing image gradient diffusion from an edge with a large depth value to an edge with a small depth value, which achieves a better visual effect and optimizes the quality of generating the binocular image. The binocular image generation method provided in this embodiment of the present disclosure and the binocular image generation method provided in the above embodiment belong to the same concept. For the technical details not described in detail in this embodiment, reference can be made to the above embodiment, and the same technical features have the same effects in this embodiment and the above embodiment.

This embodiment of the present disclosure may be combined with the optional solutions in the binocular image generation method provided in the above embodiment. In the binocular image generation method provided in this embodiment, the original image may be a video frame. A plurality of video frames in a video are used as original images, so that binocular images may be generated for the plurality of video frames. After the plurality of binocular images are generated, the method may further include: generating a stereoscopic video based on the plurality of the binocular images. For example, the binocular images corresponding to the plurality of video frames are synthesized into a binocular video by using an existing algorithm, tool, etc. for synthesizing a video from images, to obtain the stereoscopic video. A left-eye video and a right-eye video of the binocular video can be played in a left-eye display region and a right-eye display region, respectively, which can allow a viewer to achieve the effect of viewing the stereoscopic video in the visual sense, improve the sense of immersion, and greatly improve the viewing experience.

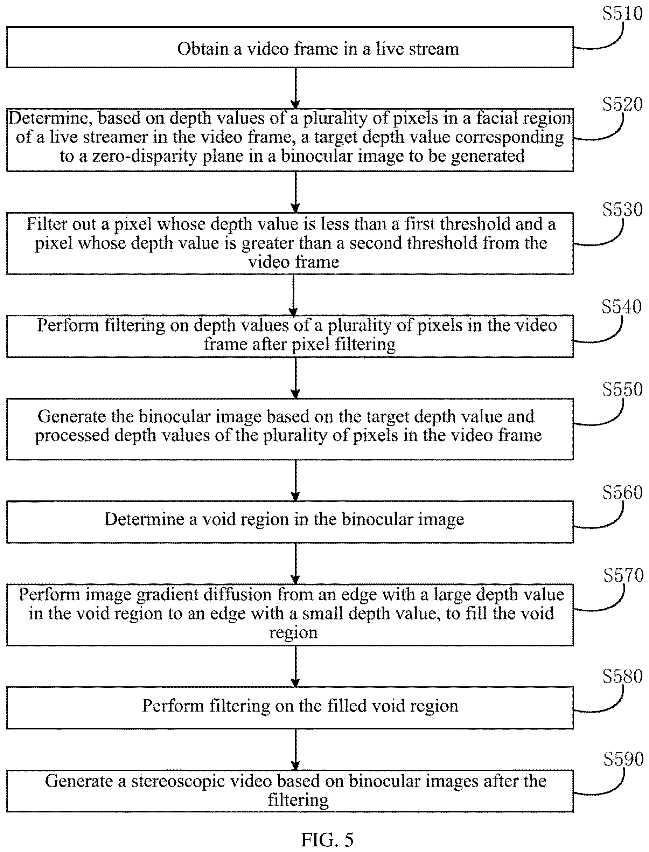

For example, FIG. 5 is a schematic flowchart of a binocular image generation method according to an embodiment of the present disclosure. As shown in FIG. 5, in the binocular image generation method provided in this embodiment, a video frame may include a video frame in a live stream, and a salient region may include a facial region of a live streamer. The method may include the following steps.

S510: Obtain the video frame in the live stream.

The live stream may be a live stream that is being broadcast, or may be a live stream that is recorded. The video frame in the live stream may be obtained using an existing method for obtaining a video frame.

S520: Determine, based on depth values of a plurality of pixels in the facial region of the live streamer in the video frame, a target depth value corresponding to a zero-disparity plane in a binocular image to be generated.

In the field of live streaming, a region of interest to a user is usually a facial region of a live streamer, and therefore, the facial region of the live streamer may be directly used as the salient region.

S530: Filter out a pixel whose depth value is less than a first threshold and a pixel whose depth value is greater than a second threshold from the video frame.

S540: Perform filtering on depth values of a plurality of pixels in the video frame after pixel filtering.

An object corresponding to a plurality of pixels is temporally and spatially continuous between adjacent video frames. Therefore, in some implementations, temporal filtering may further be performed on a depth value of a pixel in a current video frame by using a depth value of a corresponding pixel in a previous video frame, which can improve the accuracy of processing the depth value of the pixel in the current video frame.

Performing the temporal filtering on the depth value of the pixel in the current video frame by using the depth value of the corresponding pixel in the previous video frame may, for example, include: determining a temporal disparity of a same pixel from the previous video frame to the current video frame; shifting a location of the pixel in the previous video frame based on the corresponding temporal disparity, to determine a corresponding pixel in the current video frame; propagating the depth value of the pixel in the previous video frame backward to the corresponding pixel in the current video frame, to obtain an estimated depth value of the corresponding pixel in the current video frame; and performing weighted smoothing on depth values of pixels in the current video frame based on the estimated depth value of the corresponding pixel in the current video frame, to implement the temporal filtering.

S550: Generate the binocular image based on the target depth value and processed depth values of the plurality of pixels in the video frame.

S560: Determine a void region in the binocular image.

S570: Perform image gradient diffusion from an edge with a large depth value in the void region to an edge with a small depth value, to fill the void region.

S580: Perform filtering on the filled void region.

S590: Generate a stereoscopic video based on binocular images after the filtering.

Binocular images corresponding to a plurality of video frames may be synthesized into a binocular video by using an existing algorithm, tool, etc. for synthesizing a video from images, to obtain the stereoscopic video. A left-eye video and a right-eye video of the binocular video can be played in a left-eye display region and a right-eye display region, respectively, which can allow a viewer to achieve the effect of viewing the stereoscopic live stream in the visual sense, improve the sense of immersion in live streaming, and greatly improve the viewing experience.

In the binocular image generation method provided in this embodiment, an original image may be a video frame. The plurality of video frames in the video are used as original images, so that the binocular images may be generated for the plurality of video frames, and may then be synthesized into the binocular video. A left-eye video and a right-eye video of the binocular video can be played in a left-eye display region and a right-eye display region, respectively, which can allow a viewer to achieve the effect of viewing the stereoscopic video in the visual sense, improve the sense of immersion, and greatly improve the viewing experience. The binocular image generation method provided in this embodiment of the present disclosure and the binocular image generation method provided in the above embodiment belong to the same concept. For the technical details not described in detail in this embodiment, reference can be made to the above embodiment, and the same technical features have the same effects in this embodiment and the above embodiment.

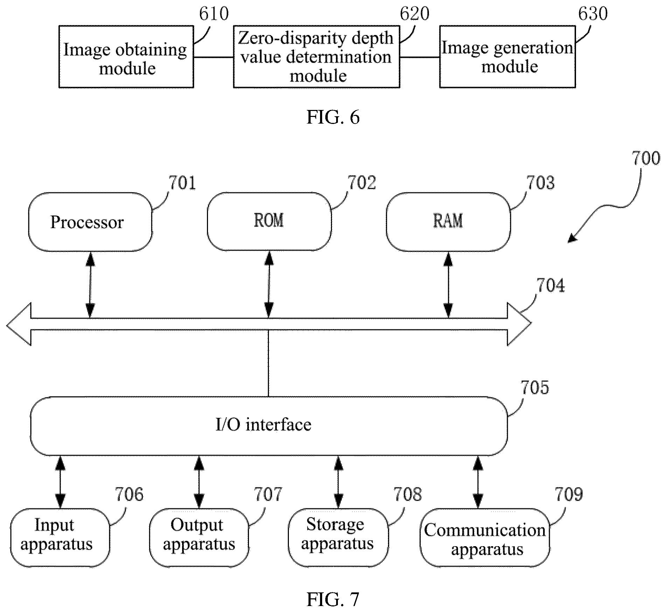

FIG. 6 is a schematic diagram of a structure of a binocular image generation apparatus according to an embodiment of the present disclosure. The binocular image generation apparatus provided in this embodiment is applicable to the generation of a binocular image from a monocular image, for example, to the generation of a video frame of a binocular video from a video frame of a monocular video.

As shown in FIG. 6, the binocular image generation apparatus provided in this embodiment of the present disclosure may include:
an image obtaining module 610 configured to obtain an original image;
a zero-disparity depth value determination module 620 configured to determine, based on depth values of a plurality of pixels in a salient region of the original image, a target depth value corresponding to a zero-disparity plane in a binocular image to be generated; and
an image generation module 630 configured to generate the binocular image based on the target depth value and depth values of a plurality of pixels in the original image.

In some optional implementations, the zero-disparity depth value determination module may be configured to:
generate a first histogram based on the depth values of the plurality of pixels in the salient region of the original image; and
determine, based on a distribution of the depth values in the first histogram, the target depth value corresponding to the zero-disparity plane in the binocular image to be generated.

In some optional implementations, the zero-disparity depth value determination module may be configured to:
determine the target depth value corresponding to the zero-disparity plane in the binocular image to be generated, based on a depth value range in the first histogram within which a largest number of pixels are distributed.

In some optional implementations, the image generation module may be configured to:
determine, based on the target depth value and the depth values of the plurality of pixels in the original image, displacement vectors of the plurality of pixels in the original image in each of a left-eye image and a right-eye image that are to be generated; and
process the plurality of pixels in the original image based on the plurality of displacement vectors, to generate the left-eye image and the right-eye image.

In some optional implementations, the image generation module may further be configured to:
before the binocular image is generated based on the target depth value and the depth values of the plurality of pixels in the original image, filter out a pixel whose depth value is less than a first threshold and a pixel whose depth value is greater than a second threshold from the original image, where the first threshold is less than the second threshold.

In some optional implementations, the image generation module may further be configured to:
before the binocular image is generated based on the target depth value and the depth values of the plurality of pixels in the original image, perform filtering on the depth values of the plurality of pixels in the original image.

In some optional implementations, the image generation module may further be configured to:
after the binocular image is generated, determine a void region in the binocular image; and
perform image gradient diffusion from an edge with a large depth value in the void region to an edge with a small depth value, to fill the void region.

In some optional implementations, the image generation module may further be configured to:
after the void region is filled, perform filtering on the filled void region.

In some optional implementations, the original image is a video frame.

The image generation module may further be configured to: after the binocular image is generated, generate a stereoscopic video based on a plurality of binocular images.

In some optional implementations, the video frame includes a video frame in a live stream, and the salient region includes a facial region of a live streamer.

The binocular image generation apparatus provided in this embodiment of the present disclosure can perform the binocular image generation method provided in any embodiment of the present disclosure, and has corresponding functional modules and effects for performing the method.

It is worth noting that the units and modules included in the above apparatus are obtained through division merely according to functional logic, but are not limited to the above division, as long as corresponding functions can be implemented. In addition, names of the functional units are merely used for mutual distinguishing, and are not used to limit the protection scope of the embodiments of the present disclosure.

Reference is made to FIG. 7 below. FIG. 7 is a schematic diagram of a structure of an electronic device (such as a terminal device or a server in FIG. 7) 700 suitable for implementing an embodiment of the present disclosure. The electronic device in this embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in FIG. 7 is merely an example, and should not impose any limitation on the function and scope of use of the embodiments of the present disclosure.

As shown in FIG. 7, the electronic device 700 may include a processor (e.g., a central processor, a graphics processor, etc.) 701, and the processor 701 may perform a variety of appropriate actions and processing in accordance with a program stored in a read-only memory (ROM) 702 or a program loaded from a storage apparatus 708 into a random-access memory (RAM) 703. The RAM 703 further stores various programs and data required for the operation of the electronic device 700. The processor 701, the ROM 702, and the RAM 703 are connected to each other through a bus 704. An input/output (I/O) interface 705 is also connected to the bus 704.

Generally, the following apparatuses may be connected to the I/O interface 705: an input apparatus 706 including, for example, a touchscreen, a touchpad, a keyboard, a mouse, a camera, a microphone, an accelerometer, and a gyroscope; an output apparatus 707 including, for example, a liquid crystal display (LCD), a speaker, and a vibrator; the storage apparatus 708 including, for example, a tape and a hard disk; and a communication apparatus 709. The communication apparatus 709 may allow the electronic device 700 to perform wireless or wired communication with other devices to exchange data. Although FIG. 7 shows the electronic device 700 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the methods shown in the flowcharts. In such an embodiment, the computer program may be downloaded and installed from a network through the communication apparatus 709, installed from the storage apparatus 708, or installed from the ROM 702. When the computer program is executed by the processor 701, the above functions defined in the binocular image generation method of the embodiment of the present disclosure are performed.

The electronic device provided in this embodiment of the present disclosure and the binocular image generation methods provided in the above embodiment belong to the same concept. For the technical details not described in detail in this embodiment, reference can be made to the above embodiment, and this embodiment and the above embodiment have the same effects.

An embodiment of the present disclosure provides a computer-readable storage medium storing a computer program thereon, where when executed by a processor, the program causes the binocular image generation method provided in the above embodiment to be implemented.

It should be noted that the above computer-readable storage medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. Examples of the computer-readable storage medium may include, but are not limited to: an electrical connection having at least one wire, a portable computer magnetic disk, a hard disk, a random access memory (RAM), a read-only memory (ROM), an erasable programmable read-only memory (EPROM) or a flash memory (FLASH), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable storage medium other than the computer-readable storage medium. The computer-readable signal medium can send, propagate, or transmit a program used by or in combination with an instruction execution system, apparatus, or device. The program code contained in the computer-readable storage medium may be transmitted by any suitable medium, including but not limited to: electric wires, optical cables, radio frequency (RF), etc., or any suitable combination thereof.

In some implementations, a client and a server can communicate using any currently known or future-developed network protocol such as a HyperText Transfer Protocol (HTTP), and may be connected to digital data communication (for example, communication network) in any form or medium. Examples of the communication network include a local area network (LAN), a wide area network (WAN), an internetwork (for example, the Internet), a peer-to-peer network (for example, an ad hoc peer-to-peer network), and any currently known or future-developed network.

The above computer-readable storage medium may be contained in the above electronic device. Alternatively, the computer-readable storage medium may exist independently, without being assembled into the electronic device.

The above computer-readable medium carries at least one program, and the at least one program, when executed by the electronic device, causes the electronic device to:
obtain an original image; determine, based on depth values of pixels in a salient region of the original image, a target depth value corresponding to a zero-disparity plane in a binocular image to be generated; and generate the binocular image based on the target depth value and depth values of pixels in the original image.

Computer program code for performing operations of the present disclosure can be written in at least one programming language or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and the block diagrams in the accompanying drawings illustrate the possibly implemented architecture, functions, and operations of the system, method, and computer program product according to the embodiments of the present disclosure. In this regard, each block in the flowchart or block diagram may represent a module, program segment, or part of code, and the module, program segment, or part of code contains at least one executable instruction for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and the flowchart, and a combination of the blocks in the block diagram and the flowchart may be implemented by a dedicated hardware-based system that executes specified functions or operations, or may be implemented by a combination of dedicated hardware and computer instructions.

The related units described in the embodiments of the present disclosure may be implemented by means of software, or may be implemented by means of hardware. The names of the units and the modules do not constitute a limitation on the units and the modules themselves.

The functions described herein above may be performed at least partially by at least one hardware logic component. For example, without limitation, exemplary types of hardware logic components that may be used include: a field-programmable gate array (FPGA), an application-specific integrated circuit (ASIC), application-specific standard parts (ASSP), a system-on-chip (SOC) system, a complex programmable logic device (CPLD), and the like.

In the context of the present disclosure, a machine-readable storage medium may be a tangible medium that may contain or store a program used by or in combination with an instruction execution system, apparatus, or device. The machine-readable storage medium may be a machine-readable signal medium or a machine-readable storage medium. The machine-readable storage medium may include, but is not limited to, electronic, magnetic, optical, electromagnetic, infrared, or semiconductor systems, apparatuses, or devices, or any suitable combination thereof. Examples of the machine-readable storage medium may include an electrical connection based on at least one wire, a portable computer disk, a hard disk, a random access memory (RAM), a read-only memory (ROM), an erasable programmable read-only memory (EPROM), a flash memory, an optic fiber, a portable compact disk read-only memory (CD-ROM), an optical storage device, a magnetic storage device, or any suitable combination thereof.

According to one or more embodiments of the present disclosure, a binocular image generation method is provided. The method includes:
obtaining an original image;
determining, based on depth values of a plurality of pixels in a salient region of the original image, a target depth value corresponding to a zero-disparity plane in a binocular image to be generated; and
generating the binocular image based on the target depth value and depth values of a plurality of pixels in the original image.

According to one or more embodiments of the present disclosure, the binocular image generation method is provided, which further includes:
In some optional implementations, the determining, based on depth values of a plurality of pixels in a salient region of the original image, a target depth value corresponding to a zero-disparity plane in a binocular image to be generated includes:
generating a first histogram based on the depth values of the plurality of pixels in the salient region of the original image; and
determining, based on a distribution of the depth values in the first histogram, the target depth value corresponding to the zero-disparity plane in the binocular image to be generated.

According to one or more embodiments of the present disclosure, the binocular image generation method is provided, which further includes:
In some optional implementations, the determining, based on a distribution of the depth values in the first histogram, the target depth value corresponding to the zero-disparity plane in the binocular image to be generated includes:
determining the target depth value corresponding to the zero-disparity plane in the binocular image to be generated, based on a depth value range in the first histogram within which a largest number of pixels are distributed.

According to one or more embodiments of the present disclosure, the binocular image generation method is provided, which further includes:
In some optional implementations, the generating the binocular image based on the target depth value and depth values of a plurality of pixels in the original image includes:
determining, based on the target depth value and the depth values of the plurality of pixels in the original image, displacement vectors of the plurality of pixels in the original image in each of a left-eye image and a right-eye image that are to be generated; and
processing the plurality of pixels in the original image based on the plurality of displacement vectors, to generate the left-eye image and the right-eye image.

According to one or more embodiments of the present disclosure, the binocular image generation method is provided, which further includes:
In some optional implementations, before the generating the binocular image based on the target depth value and depth values of a plurality of pixels in the original image, the method further includes:
filtering out a pixel whose depth value is less than a first threshold and a pixel whose depth value is greater than a second threshold from the original image, where the first threshold is less than the second threshold.

According to one or more embodiments of the present disclosure, the binocular image generation method is provided, which further includes:
In some optional implementations, before the generating the binocular image based on the target depth value and depth values of a plurality of pixels in the original image, the method further includes:
performing filtering on the depth values of the plurality of pixels in the original image.

According to one or more embodiments of the present disclosure, the binocular image generation method is provided, which further includes:
In some optional implementations, after the generating the binocular image, the method further includes:
determining a void region in the binocular image; and
performing image gradient diffusion from an edge with a large depth value in the void region to an edge with a small depth value, to fill the void region.

According to one or more embodiments of the present disclosure, the binocular image generation method is provided, which further includes:
In some optional implementations, after the void region is filled, the method further includes:
performing filtering on the filled void region.

According to one or more embodiments of the present disclosure, the binocular image generation method is provided, which further includes:
In some optional implementations, the original image is a video frame.

After the generating the binocular image, the method further includes: generating a stereoscopic video based on a plurality of binocular images.

According to one or more embodiments of the present disclosure, the binocular image generation method is provided, which further includes:
In some optional implementations, the video frame includes a video frame in a live stream, and the salient region includes a facial region of a live streamer.

According to one or more embodiments of the present disclosure, a binocular image generation apparatus is provided. The apparatus includes:
an image obtaining module configured to obtain an original image;
a zero-disparity depth value determination module configured to determine, based on depth values of a plurality of pixels in a salient region of the original image, a target depth value corresponding to a zero-disparity plane in a binocular image to be generated; and
an image generation module configured to generate the binocular image based on the target depth value and depth values of a plurality of pixels in the original image.

## Claims

1. A binocular image generation method, **characterized by** comprising:
obtaining an original image;
determining, based on depth values of a plurality of pixels in a salient region of the original image, a target depth value corresponding to a zero-disparity plane in a binocular image to be generated; and
generating the binocular image based on the target depth value and depth values of a plurality of pixels in the original image.

2. The method according to claim 1, **characterized in that** the determining, based on depth values of a plurality of pixels in a salient region of the original image, a target depth value corresponding to a zero-disparity plane in a binocular image to be generated comprises:
generating a first histogram based on the depth values of the plurality of pixels in the salient region of the original image; and
determining, based on a distribution of the depth values in the first histogram, the target depth value corresponding to the zero-disparity plane in the binocular image to be generated.

3. The method according to claim 2, **characterized in that** the determining, based on a distribution of the depth values in the first histogram, the target depth value corresponding to the zero-disparity plane in the binocular image to be generated comprises:
determining the target depth value corresponding to the zero-disparity plane in the binocular image to be generated, based on a depth value range in the first histogram within which a largest number of pixels are distributed.

4. The method according to claim 1, **characterized in that** the generating the binocular image based on the target depth value and depth values of a plurality of pixels in the original image comprises:
determining, based on the target depth value and the depth values of the plurality of pixels in the original image, a plurality of displacement vectors of the plurality of pixels in the original image in each of a left-eye image and a right-eye image that are to be generated; and
processing the plurality of pixels in the original image based on the plurality of displacement vectors, to generate the left-eye image and the right-eye image.

5. The method according to claim 1, **characterized in that** before the generating the binocular image based on the target depth value and depth values of a plurality of pixels in the original image, the method further comprises:
filtering out a pixel whose depth value is less than a first threshold and a pixel whose depth value is greater than a second threshold from the original image, wherein the first threshold is less than the second threshold.

6. The method according to claim 1, **characterized in that** before the generating the binocular image based on the target depth value and depth values of a plurality of pixels in the original image, the method further comprises:
performing filtering on the depth values of the plurality of pixels in the original image.

7. The method according to claim 1, **characterized in that** after the generating the binocular image, the method further comprises:
determining a void region in the binocular image; and
performing image gradient diffusion from an edge with a large depth value in the void region to an edge with a small depth value, to fill the void region.

8. The method according to claim 7, **characterized in that** after the void region is filled, the method further comprises:
performing filtering on the filled void region.

9. The method according to claim 1, **characterized in that** the original image is a video frame; and
after the generating the binocular image, the method further comprises: generating a stereoscopic video based on a plurality of binocular images.

10. The method according to claim 9, **characterized in that** the video frame comprises a video frame in a live stream, and the salient region comprises a facial region of a live streamer.

11. A binocular image generation apparatus, comprising:
an image obtaining module configured to obtain an original image;
a zero-disparity depth value determination module configured to determine, based on depth values of a plurality of pixels in a salient region of the original image, a target depth value corresponding to a zero-disparity plane in a binocular image to be generated; and
an image generation module configured to generate the binocular image based on the target depth value and depth values of a plurality of pixels in the original image.

12. An electronic device, comprising:
at least one processor; and
a storage apparatus configured to store at least one program, wherein
the at least one program, when executed by the at least one processor, causes the at least one processor to implement the binocular image generation method according to any one of claims 1 to 10.

13. A storage medium comprising computer-executable instructions that, when executed by a computer processor, cause the binocular image generation method according to any one of claims 1 to 10 to be performed.
